# NEUE EUROPÄISCHE PATENTSCHRIFT

(11) **EP 1 086 176 B2**
(45) Veröffentlichungstag und Bekanntmachung des Hinweises auf die Entscheidung über den Einspruch: **18.07.2007**
(45) Hinweis auf die Patenterteilung: 22.10.2003
(21) Anmeldenummer: 99926302.3
(22) Anmeldetag: 11.05.1999
(51) Int. Cl.: C08L 23/02, C08L 51/06, C08L 23/16

(54) **EMISSIONSARMER BODENBELAG**
LOW-EMISSION FLOOR COVERING
REVETEMENT DE SOL FAIBLEMENT POLLUANT

(30) Priorität: 12.05.1998 DE 19821193
(43) Veröffentlichungstag der Anmeldung: 28.03.2001
(73) Patentinhaber: DLW Aktiengesellschaft, D-74321 Bietigheim-Bissingen (DE)
(72) Erfinder: FISCHER, Bernd, D-71546 Aspach (DE); KÖLBIG, Stefan, D-71638 Ludwigsburg (DE); MAUK, Hans-Jörg Dr., D-74395 Mundelsheim (DE); OLNHAUSEN, Heinz von, D-74321 Bietigheim-Bissingen (DE)
(74) Vertreter: Müller-Boré & Partner Patentanwälte
(86) Internationale Anmeldenummer: PCT/EP1999/003229
(87) Internationale Veröffentlichungsnummer: WO 1999/058602

(56) Entgegenhaltungen:
- EP-A- 0 479 457
- WO-A-96/04419
- WO-A-97/47802
- WO-A-98/38245
- DE-A- 4 340 478
- US-A- 5 637 410
- US-A- 5 700 865

## Beschreibung

Die vorliegende Erfindung betrifft einen Bodenbelag mit ausgezeichneter Verschleißfestigkeit, der im wesentlichen keine geruchsbelästigenden und/oder gesundheitsbeeinträchtigenden Emissionen verursacht, und darüberhinaus keine durch Alterung veränderbare Farbgebung über einen längeren Zeitraum zeigt, sowie ein Verfahren zu dessen Herstellung.

Elastomerbeläge auf Kautschuk-Basis gehören aufgrund ihrer Strapazierfähigkeit und vielfältigen Einsatzmöglichkeiten zu den Hochleistungsbodenbelägen. Die Vulkanisations- und Prozeßadditive bzw. -mittel neigen jedoch in unveränderter oder chemisch veränderter Form zum Emittieren aus dem Bodenbelag.

Üblicherweise werden vulkanisierbare Kautschuke der verschiedensten Typen als polymeres Bindemittel für Bodenbeläge verwendet. Diese Kautschuke sind hauptsächlich SBR-, NR-, IR-, IIR- und NBR-Kautschuke, deren Vernetzung durch Vernetzungsmittel wie Schwefel, in Verbindung mit Vulkanisationsadditiven erzeugt wird. Derartige Vulkanisationsadditive können Vulkanisationsbeschleuniger wie Mercaptoverbindungen, Sulfenamide, Thiuram, Guanidin, Dithiocarbamate und Amine, Vulkanisationsverzögerer wie Phthalsäureanhydrid und N-Cyclohexylthiophthalimid, Alterungsschutzmittel wie 2-Mercaptobenzimidazol, Mastifiziermittel wie 2,2'-Dibenzamido-diphenyl-disulfid, Weichmacher oder Prozeßöle, verstärkende Harze wie Phenol-Formaldehydharz und Vulkanisationsaktivatoren z.T. wie Zinkoxid sein. Diese Vernetzungs- und Zusatzstoffe werden beim Vulkanisierungsprozeß nicht vollständig umgesetzt. Somit verbleiben diese Zusatzstoffe bzw. deren beim Vulkanisierungsprozeß erzeugte Nebenprodukte teilweise im System bzw. emittieren aus diesem Kautschuk-System. Dieser Emittiervorgang kann über einen längeren Zeitraum andauern. Bei Bodenbelägen geschieht dies hauptsächlich dann, wenn sie aus ihrer Verpackung genommen werden und auf dem Boden mittels Klebstoff auf einem geeigneten Untergrund fixiert werden. Die Temperatur, die Luftfeuchtigkeit und die Belüftung des Raums beeinflußen ferner den Fortgang des Emittiervorgangs.

Im allgemeinen verursachen diese aus dem Kautschuk-System emittierenden Vulkanisationsadditive oder deren beim Vulkanisierungsprozeß erzeugten Nebenprodukte einen unangenehmen Geruch und sind in bestimmten Konzentrationen gesundheitsbeeinträchtigend. Ebenso hat es sich gezeigt, daß emittierende Substanzen aus Kautschukbelägen unter Umständen weiße Wände (Putze, Wandfarbe etc.) zum Vergilben bringen können. Ferner unterliegen diese Elastomer-Bodenbeläge auf Kautschukbasis einer Alterung, die sich auf den Farbton eines dessinierten Bodenbelags durch beispielsweise Vergilbung nachteilig bemerkbar macht.

Somit liegt der vorliegenden Erfindung die Aufgabe zugrunde, einen verschleißfesten, emissionsarmen, alterungsbeständigen und farblich variabel dessinierten Bodenbelag mit ansprechender Optik bereitzustellen, der elastomere, kautschukartige Eigenschaften ohne Vorhandensein von mit Schwefel bzw. Schwefelverbindungen vulkanisiertem Kautschuk aufweist.

Diese Aufgabe wird durch die in den Ansprüchen gekennzeichneten Ausführungsformen gelöst. Insbesondere wird ein Bodenbelag bereitgestellt, der als polymeres Bindemittel mindestens ein Elastomer auf Basis mindestens eines Polyolefins mit einer Dichte < 0,910 g/cm³ und mindestens eines Pfropfcopolymer umfaßt. Vorzugsweise wird ein Polyolefin mit einer Dichte im Bereich von 0,85-0,91 g/cm³, besonders bevorzugt 0,85-0,892 g/cm³, verwendet. Das Polyolefin kann vorzugsweise aus der Klasse der PE-VLD-Polymere ausgewählt sein.

Gemäß der Erfindung ist das Polyolefin ein Gemisch von mindestens zwei Ethylencopolymerisaten, wobei das Ethylencopolymerisat als Hauptpolymer ein Copolymerisat (a) mit einer Dichte von 0,89 - 0,91 g/cm³ und zur Steuerung der Rheologie und Elastizität ein Copolymerisat (b) mit einer Dichte von 0,86-0,88 g/cm³ und einem MFI > 3 (bei 190°C; 2, 16 kg) umfaßt.

Beispielsweise sind die Copolymerisate (a) und (b) Copolymerisate von Ethylen mit Octen. Die Copolymerisate (a) und (b) können beispielsweise im Gewichtsverhältnis von 4:1 bis 3:2 vorliegen.

Zur Erhöhung der Verschleißfestigkeit enthält das polymere Bindemittel als weitere Komponente mindestens ein Pfropfcopolymer, vorzugsweise auf Basis eines HD-Polyethylens. Insbesondere kann das Pfropfcopolymer ein Maleinsäureanhydrid-gepfropftes HD-Polyethylen sein, wobei der Pfropfgrad vorzugsweise 1 bis 5 % beträgt. Der Anteil des Pfropfcopolymers beträgt beispielsweise 5 bis 25 Gew.-%, bezogen auf das Gesamtgewicht des polymeren Bindemittels. Dementsprechend liegt der Anteil des mindestens einen Polyolefins, welches neben dem Pfropfcopolymer das polymere Bindemittel des erfindungsgemäßen Bodenbelags konstituiert, zwischen 75 bis 95 Gew.-%, bezogen auf das Gesamtgewicht des polymeren Bindemittels.

Die zum Aufbau des erfindungsgemäßen Bodenbelags verwendeten Polymere, d.h. das mindestens eine Polyolefin in Kombination mit dem mindestens einen Pfropfcopolymer, wird mit mindestens einem geeigneten Vernetzungsmittel auf Basis von organischen Peroxiden, insbesondere aromatenfreie organische Peroxide, und gegebenenfalls einem oder mehreren Co-Vernetzern vernetzt. Ein Beispiel eines geeigneten, aromatenfreien organischen Peroxids ist das im Handel erhältliche DHBP (2,5 Dimethyl-2,5-di(tert.butylperoxy)hexan). Als Co-Vernetzer können beispielsweise Isocyanursäurederivate und/oder von Polyolen abgeleitete Acrylat- bzw. Methacrylatderivate verwendet werden. Besonders bevorzugt wird als Vernetzungsmittel ein Gemisch aus einem Gewichtsteil aromatenfreiem organischem Peroxid, zwei Gewichtsteilen Trimethylolpropantrimethacrylat (TRIM) und einem Gewichtsteil Triallylisocyanurat (TAIC) eingesetzt. TRIM beeinflußt dabei die Härte und das Eindruckverhalten des den erfindungsgemäßen Bodenbelag konstituierenden Elastomers, wohingegen TAIC sich günstig auf die Vernetzungsgeschwindigkeit auswirkt.

Geeignete Polyolefine, welche zum Aufbau des erfindungsgemäßen Bodenbelag verwendet werden können, sind beispielsweise die folgenden, im Handel erhältlichen Polymere: DOW DSH 1500, DOW DSH 8501, Exxon Exact 4041 und Exxon Exact 4033. Bevorzugte Komponenten für das vorgenannte EthylenCopolymerisat sind beispielsweise DOW DSH 1505 als Copolymerisat (a) sowie DOW EG 8200 als zusätzliches Copoymerisat (b), welches zur Steuerung der Rheologie und Elastizität eingesetzt werden kann. Ein geeignetes Pfropfcopolymer, welches zum Aufbau des erfindungsgemäßen Bodenbelag verwendet werden kann, ist beispielsweise das im Handel erhältliche Polymer DOW XU 60769.07.

Ferner kann der erfindungsgemäße Bodenbelag Füllstoffe oder ein Gemisch davon, insbesondere ein Gemisch aus plättchenförmigen und kristallinen Mineralverwachsungen, enthalten, welche als "Verstärkerfüllstoffe" einen wesentlichen Beitrag zu den Eigenschaften, insbesondere den mechanischen Eigenschaften, des erfindungsgemäßen Bodenbelags beitragen. Vorzugsweise beträgt die eingesetzte Füllstoffmenge, bezogen auf das Gesamtgewicht der den erfindungsgemäßen Bodenbelag bildenden Zusammensetzung bzw. Formulierung, 35 bis 60 Gew.-%, wobei ein Mindestanteil plättchenförmiger Füllstoffpartikel zur Erlangung höherer Füllstoffmengen notwendig ist. Beispiele für derartige Füllstoffe sind:
- Sillitin, erhältlich von Hofmann Mineral,
- Doltitan 2, erhältlich von PETROCHEM K. Zafranas S.A.,
- Inducarb 2, erhältlich von Omya, oder
- Kronos 2200, erhältlich von Kronos Titan.

Weitere Füllstoffe, die der erfindungsgemäße Bodenbelag beispielsweise enthalten kann, sind wie folgt:

| Füllstoffe | Typ(z.B.) | Lieferant |
|---|---|---|
| Quarzmehl | Sirkon SF 300 | Quarzwerke GmbH |
| Kaolin | Nucap EDL 200 | Lehmann&Voss&Co |
| Talkum | Alpha Talc CT 6/46 | Alpha-Calcit Füllstoffe GmbH KG |
| Holzmehl | Holzmehlmühle Westerkamp & Co | Holzmehltype 120 |
| Dolomit | KL 30 | Naintsch Mineralwerke Graz |
| Aluminiumtrihydroxyd | Martinal ON 313 | Martinswerk GmbH |
| gefällte Kieselsäure | P 820 | Degussa AG |
| Schwerspat | Schwerspat TS | Sachtleben GmbH |
| Kreide | Omyacarb 6 | Omya |

Ferner können je nach Farbstellung beispielsweise folgende anorganische Pigmente im erfindungsgemäßen Bodenbelag enthalten sein:

| Pigmente | Lieferant |
|---|---|
| Kronos 2200 | Kronos Titan |
| Bayferrox 140 | Bayer AG |
| Bayferrox 930 | Bayer AG |
| Hostaprint A2 R 31 | Clariant |

Gegebenenfalls können auch übliche Verarbeitungshilfsmittel im erfindungsgemäßen Bodenbelag enthalten sein. Ein Beispiel solcher Verarbeitungshilfsmittel ist wie folgt:

| Gleitmittel | Typ (z.B.) | Lieferant |
|---|---|---|
| Ca-Stearat | Ceasit 1 | Bärlocher GmbH |
| Esterwachs | OP-Wachs | Clariant |

Darüberhinaus können auch Antioxidantien, UV-Stabilisatoren und dergleichen enthalten sein:

| Stabilisatoren | Typ (z.B.) | Lieferant |
|---|---|---|
| Antioxidans | Irganox 1010 | Ciba Geigy AG |
| UV-Stabilisator | Chimassorb 944 Fl | Ciba Geigy AG |

Aufgrund des erfindungsgemäß verwendeten Elastomers als polymeres Bindemittel zeigt der Bodenbelag der vorliegenden Erfindung im wesentlichen keine geruchsbelästigenden und/oder gesundheitsbeeinträchtigenden Emissionen im Vergleich zu bekannten Bodenbelägen mit Kautschuken (SBR) als Elastomere. Darüberhinaus weist der erfindungsgemäße Bodenbelag eine ausgezeichnete Abriebfestigkeit im Vergleich mit bekannten Bodenbelägen auf Kautschukbasis auf. Durch die nachfolgende Vernetzung der das mindestens eine Elastomer konstituierenden Polymere als polymeres Bindemittel im erfindungsgemäßen Bodenbelag kann überraschenderweise die Füllstoffmenge im Bodenbelag auf bis zu 60 Gew.-%, bezogen auf das Gesamtgewicht der den erfindungsgemäßen Bodenbelag bildenden Zusammensetzung bzw. Formulierung, unter Beibehalten eines ausgezeichneten Verschleißverhaltens erhöht werden.

Überraschenderweise läßt sich ferner die Oberflächenenergie des so hergestellten Bodenbelages hervorragend mit einer Koronabehandlung erhöhen, so daß ein Primer sehr gute Haftung aufweist und damit eine bessere Verklebbarkeit als bei Kautschukbodenbelägen resultiert. Überraschenderweise kann auch eine geringere Änderung des Farbtons (Vergilbung) während der Gebrauchsdauer beim erfindungsgemäßen Bodenbelag festgestellt werden. Somit kann mit dem erfindungsgemäßen Bodenbelag eine ausreichend flexible Dessinier- bzw. Farbgestaltungsmöglichkeit, eine ausreichende Alterungsbeständigkeit und geringe Emissionsbelastung bei gleichzeitiger Beibehaltung der gewünschten elastomeren Eigenschaften erzielt werden.

Ein weiterer Gegenstand der vorliegenden Erfindung ist ein Verfahren zur Herstellung des erfindungsgemäßen Bodenbelags, welches das Bereitstellen eines Trägers in Bahnenform und das Aufbringen des vorstehend definierten Elastomers auf eine Seite des Trägers umfaßt.

Als Träger kann jegliches bisher in Bodenbelägen verwendetes Material auf Basis natürlicher und/oder synthetischer Gewebe oder Gewirke, textiler Werkstoffe sowie auf Basis von Vlies bzw. Vliesstoffen verwendet werden. Beispielsweise können Jutegewebe, Mischgewebe aus natürlichen Fasern wie Baumwolle und Zellwolle, Glasfasergewebe, mit Haftvermittler beschichtetes Glasfasergewebe, Mischgewebe aus Synthesefasern, Gewebe aus Kern/Mantelfasern mit z.B. einem Kern aus Polyester und einer Ummantelung aus Polyamid, eingesetzt werden.

Ferner wird ein neues Verfahren zur Herstellung eines emissionsarmen, insbesondere homogenen Bodenbelags bereitgestellt, welches im wesentlichen die folgenden Schritte umfaßt:
- Benetzen von Partikeln mit einer Lösung, die mindestens ein aromatenfreies organisches Peroxid und gegebenenfalls ein oder mehrere Co-Vernetzer und gegebenenfalls Prozeßöl enthält, wobei die Partikel die vorstehend definierten Polymere, welche das polymere Bindemittel des erfindundungsgemäßen Bodenbelags bilden, unvernetzt oder teilvernetzt in Form eines Mahlguts oder Granulats enthalten,
- Erwärmen der Partikel auf eine Temperatur, bei welcher das Peroxid eine ausreichend lange Stabilität aufweist, wobei die Partikel anschließend unter Vorverdichten einer Formgebung zu einem flächigen Produkt unterzogen werden, und
- Verpressen des so erhaltenen, flächigen Produkts in einer geeigneten Vorrichtung bei einer Temperatur, bei welcher die Halbwertszeit des Peroxids derart verringert ist, daß gleichzeitig eine durch das Peroxid initiierte Vernetzung erfolgt, zum Erhalt eines flächigen Endprodukts.

Insbesondere kann das erfindungsgemäße Verfahren in einer bevorzugten Ausführungsform die folgenden Schritte (a) bis (d) umfassen, worin in Schritt (a) zunächst eine vernetzungsfähige Masse, enthaltend das vorstehend definierte polymere Material, Füllstoffe und zur Vorvernetzung mindestens ein Peroxid sowie gegebenenfalls prozeßfördernde Additive, in einer geeigneten Vorrichtung, wie beispielsweise ein Extruder, zur Herstellung eines Mahlguts oder eines Granulats compoundiert wird. Beispielsweise kann zur Extrudercompoundierung ein gleichsinnig drehender Zweischneckenextruder ZE 40×39,5 D verwendet werden. Der Einzugsbereich wird dabei auf beispielsweise 140-175°C aufgeheizt, die weiteren Zonen bis zur Düse auf 195°C. Die Schneckendrehzahl liegt dabei üblicherweise zwischen 60 und 80 U/min. Der austretende Strang wird im Wasserbad abgekühlt und im Stranggranulator granuliert. Das derartig erhaltene Granulat kann zur Erzielung bestimmter Strukturen vor der Benetzung mit Peroxid nachgemahlen werden.

Anschließend wird in Schritt (b) das derart erhaltene Mahlgut bzw. Granulat (nachfolgend auch als "Partikel" bezeichnet) mit einer Lösung, die mindestens ein aromatenfreies organisches Peroxid sowie optional Co-Vernetzer und gegebenenfalls Prozeßöl enthält, benetzt, wodurch eine Migration des Peroxids und der Co-Vernetzer in das Mahlgut- bzw. Granulat-Partikel ermöglicht wird. Das Granulatgemisch, dessen Partikel sich im Vorvernetzungsgrad unterscheiden können, wird dabei in einem Granulattrockner auf eine Temperatur von etwa 50°C erwärmt. Das warme Granulat wird anschließend in einen langsam laufenden Horizontalmischer eingebracht und mit einem Flüssiggemisch aus Co-Vernetzern und ggf. Prozeßöl benetzt und etwa 30 Minuten vermischt. Anschließend wird mit Peroxid und ggf. Prozeßöl benetzt und noch etwa 10 Minuten vermischt. Nach einer Gesamtmischzeit von etwa 40 min. ist die Flüssigmischung in die Granulatpartikel eindiffundiert. Das Granulat kann anschließend bis zur Weiterverarbeitung mind. 48 h, vorzugsweise in einem wärmeisolierten Behälter, zur langsameren Abkühlung zwischengelagert werden.

In Schritt (c) werden die Partikel auf etwa 50°C erwärmt, wobei die Partikel unter Vorverdichten einer Formgebung, beispielsweise in einem Spalt eines Zweiwalzwerks, unterzogen werden. Die Walzen weisen dabei üblicherweise eine Oberflächentemperatur von 130 - 170°C auf. Die Walzenoberfläche kann glatt oder geriffelt/rautiert sein. Für die geriffelte Walze gilt die niedrigere Oberflächentemperatur. Die im Walzenspalt erzeugte Struktur des erhaltenen Flächengebildes ist dabei vom Durchmesser und Oberflächenbeschaffenheit der Walzen abhängig. Bei glatten Walzen ergibt sich eine vom Vorvernetzungsgrad abhängige, gerichtete Struktur. Die Masse im Wulst sollte jedoch nicht heißer als die Scorch-Temperatur des in Schritt (b) eingesetzten Peroxids sein. Bei diesem Schritt wird üblicherweise ein zusammenhängendes Fell ohne Löcher mit engen Flächengewichtstoleranzen über die Breite erzeugt. Die Oberfläche des Walzfelles muß jedoch nicht üblicherweise glatt sein. Eine rauhe Oberfläche begünstigt sogar die Entlüftung im nachfolgenden Verarbeitungsschritt.

Im anschließenden Schritt (d) wird das derart vorgewärmte Material auf einer Vorrichtung, wie einer Doppelbandpresse, Etagenpresse, Doppelbandauma oder Stahlbandauma, unter einem geeigneten Preßdruck von beispielsweise 1,2-5 bar/cm² und bei einer Temperatur, beispielsweise 180-200°C, bei welcher die Halbswertszeit des Peroxids derart verringert ist, daß gleichzeitig eine durch das Peroxid initiierte Vernetzung des Materials erfolgt, geglättet und vernetzt. Aufgrund der hohen Wärmekapazität der gefüllten, polymeren Bindemittelmassen werden die entsprechenden Bahnen vor dem Einbringen in die vorgenannten Vorrichtungen üblicherweise auf eine Temperatur von etwa 160°C vorgewärmt. Die Geschwindigkeit der vorgenannten Aumen bzw. Pressen ergibt sich aus der Halbwertszeit des eingesetzten Peroxids bei der entsprechend gewählten Temperatur im Bahnenquerschnitt beim Maschinendurchgang.

In einer anderen Ausführungsform kann die Zugabe des/der Co-Vernetzer(s) bereits in Schritt (a) erfolgen, ohne daß ein weitere Zugabe des/der Co-Vernetzer(s) in Schritt (b), wie vorstehend ausgeführt, erforderlich ist, wodurch eine verkürzte Mischzeit erreicht werden kann.

In einer weiteren Ausführungsform kann ein Überschuß an Co-Vernetzer, insbesondere Trimethylolpropantrimethacrylat (TRIM), eingesetzt werden. Das molare Verhältnis zwischen Peroxid und Co-Vernetzer beträgt dabei mindestens 1:4. Der nicht reagierende Überschuß TRIM wirkt als Verarbeitungshilfsmittel und reduziert die Viskosität der Polymerschmelze vor der Peroxidzugabe im Extruder. Bei dem nachfolgenden Verarbeitungsschritt im Zuge der Herstellung des erfindungsgemäßen Bodenbelags, d.h. dem Benetzen des nachgemahlenen Extrudergranulates mit flüssigem Peroxid und der sich daran anschließenden Vernetzung des flächigen Produktes, reagiert das in den Partikeln enthaltene TRIM mit dem eindiffundierenden Peroxid. Dadurch kann auf das zusätzliche Benetzen des Mahlgutes mit Co-Vernetzern verzichtet werden. Bei der Vorvernetzung im Compoundierextruder erweist sich beispielsweise folgende Reihenfolge der Rohstoffzugabe als geeignet. In die erste Dosieröffnung des Extruders wird neben dem Polymergemisch ein Masterbatch aus Additiven wie Gleitmitteln, Antioxidantien und Antistatika gegeben. Auch hier ist die Zugabe eines Co-Vernetzer-Masterbatches, wie z.B. Perkalink 301-50 (eine 50%ige Zubereitung von Triallylisocyanurat) möglich. Nach der Plastifizierzone im Extruder wird der flüssige Co-Vernetzer, wie z.B. TRIM, und ggf. Mineralöl über eine Einspritzdüse zudosiert. In diese Polymerschmelze mit reduzierter Viskosität in Folge der eindosierten Flüssigkeiten wird beispielsweise über eine Seitenfüttereinrichtung der Füllstoff zugegeben. Dem Füllstoff wird dabei vor der Einspeisung in die Polymerschmelze vorzugsweise noch das Vorvernetzungsperoxid als pulverförmiger Masterbatch zugemischt. Damit wird eine gleichmäßige Verteilung der reaktiven Komponenten gewährleistet. Zwischen der Seitenfütterung und der Vakuumentgasungseinheit am Extruder kann beispielsweise ein ausreichend langer Abschnitt für Vermischung und Reaktion derart angeordnet werden, daß durch ein speziell angepaßtes Temperaturprofil und spezifische Auslegung des Schneckenprofils eine gleichmäßige Verteilung begünstigt wird.

In einer anderen Ausführungsform des erfindungsgemäßen Verfahrens können die benetzten Partikel anstatt der in Schritt (c) ausgeführten Formgebung im Walzenspalt zur Herstellung eines richtungsfrei dessinierten Bodenbelags auf einen Mitläufer aufgestreut und mit einem geprägten Trennpapier bedeckt werden. Die Granulatschüttung wird dabei in der Presse unter Vernetzen verdichtet und bei einer entsprechenden Verweilzeit verpresst. Anschließend kann der unterseitige Mitläufer und das oberseitige Trennpapier abgezogen werden.

In einer Ausführungsform des erfindungsgemäßen Verfahrens werden zu der in Schritt (a) verwendeten, unvernetzten Masse teilvernetzte Partikel auf Basis des vorstehend definierten, Polyolefin und Pfopfcopolymer umfassenden polymeren Materials zugegeben, wodurch nach dem Verpressen in Schritt (d) eine Reliefstruktur des flächigen Produkts erhalten wird. Die teilvernetzten Partikel können einen unterschiedlichen Vernetzungsgrad aufweisen. Die Teilvernetzung der Partikel kann bei der Extrudercompoundierung vor der Granulierung im Fall des Granulats erfolgen. Die teilvernetzten Partikel werden bei der Verpressung nur reversibel verformt und durch die Rückstellkräfte nach Druckentlastung ergibt sich eine Hoch/Tief-Struktur. Der Vernetzungsgrad der teilvernetzten Partikel kann über die Menge des Peroxids und der gegebenenfalls verwendeten Co-Vernetzer eingestellt werden.

In einer weiteren Ausführungsform des erfindungsgemäßen Verfahrens wird in Schritt (a) eine vernetzungsfähige Masse auf Basis der vorstehend definierten polymeren Materialien mit mindestens einem Vernetzer und gegebenenfalls einem vorstehend definierten Additiv compoundiert, wobei durch Kontrolle der Verweilzeit im Extruder und entsprechender Schneckengeometrie und Baulänge des Extruders ein teilvernetztes Granulat erhalten werden kann. Gemäß dieser Ausführungsform sind Musterungen analog zur PVC-Technik möglich. Dies bedeutet, daß beispielsweise eine gerichtete Struktur erhalten werden kann. Insbesondere können mit dieser Ausführungsform die mechanischen Eigenschaften von Elastomerbelägen mit den optischen/strukturellen Eigenschaften von PVC-Belägen kombiniert werden.

Durch die Verwendung einer unvernetzten oder teilvernetzten Masse, d.h. eine vernetzungsfähige Masse ohne Peroxid oder mit einer sehr geringen Menge an Peroxid, kann der Prozeßablauf über die Migration des in der Lösung zur Ummantelung der Mahlgut- bzw. Granulat-Partikel verwendeten Peroxids kontrolliert werden. Ferner ist es aufgrund des mehrstufigen Herstellungsverfahrens möglich, die in der Weich-PVC-Industrie üblichen Anlagen bzw. Vorrichtungen zu verwenden.

In einer anderen Ausführungsform des erfindungsgemäßen Verfahrens kann die Masse in Schritt (a) zusätzlich mit einem chemischen Treibmittel wie beispielsweise Sulfohydrazide oder Azodicarbonamide oder Kombinationen davon, z.B. Luvopor 1417 (Fa. Lehmann & Voss & Co.) oder Tracel DB 145 (Fa. Tramaco GmbH), compoundiert werden. Nach der Vernetzung unter Druck in Schritt (d) wird durch Druckentlastung bei weiter gesteigerter Temperatur ein Aufschäumen des Materials erreicht. Diese Ausführungsform ist insbesondere für Bodenbeläge mit geschäumten Rücken verwendbar.

Zur Herstellung eines Schaumgranulat für Beläge mit Integralstruktur werden in einem Extruder ein Gemisch aus den vorgenannten Polymeren, Additiven wie Gleitmittel, Antioxidantien und Antistatika, Füllstoffen, Peroxid, Co-Vernetzern wie Methacrylate oder TAIC und einem chemischen Treibmittel wie Azodicarbonamid compoundiert. Durch entsprechende Auslegung des Extruders und angepaßte Betriebsbedingungen wird das Gemisch im Extruder teilvernetzt und aufgeschäumt und dann als Schaum durch die Extruderdüse ausgetragen. Wie beim kompakten Material wird der Strang im Wasserbad abgekühlt und granuliert. Das so erhaltene Granulat wird nachgemahlen und getrocknet und anschließend mit einem Gemisch aus flüssigem Peroxid, Co-Vernetzern und Mineralöl benetzt. Das Mahlgut wird auf ein Releasepapier gestreut, mit einem Trennpapier abgedeckt und einer beheizten Presse o.ä. zugeführt. Dabei wird die Temperatur und der Druck derart eingestellt, daß die Partikelschüttung an den Heizflächen plastisch wird und zu einer geschlossenen Fläche verschmilzt. Gleichzeitig wird durch die Temperatur der Zerfall des Peroxids initiiert, wodurch die äußeren Schichten gleichzeitig vernetzen. Der geringe Preßdruck und die einsetzende Vernetzungsreaktion verhindern ein Zusammendrücken des geschäumten Materials im Kern der so erhaltenen Platte. Dies wird auch durch eine entsprechend hohe Vorvernetzung des geschäumten Materials unterstützt. Damit ist es möglich, einen Elastomerbelag mit verschleißfester Nutzschicht und gleichzeitig reduzierter Dichte und verbesserten Trittschalleigenschaften bereitzustellen.

In den vorgenannten Vorrichtungen kann gleichzeitig auch eine Prägung erfolgen, vorzugsweise unter Verwendung eines entsprechenden Trennpapiers. Die vor dem eigentlichen Vernetzen noch vorhandene Thermoplastizität der Masse reicht dabei aus, um das Walzfell vor dem Einsetzen der Vernetzungsreaktion zu glätten oder um die Prägung auszubilden.

In einem Nachbearbeitungsschritt kann je nach der Qualität des in Schritt (c) erhaltenen Walzfelles ein Kalibrierschliff der Belagsrückseite erforderlich sein. Ferner kann anschließend die Struktur bzw. Musterung des vernetzten Materials nach Öffnen der Oberfläche durch Schleifen und/oder Spalten freigelegt werden. Zur Verbesserung der Verklebbarkeit kann eine Coronabehandlung mit einem Primerauftrag durchgeführt werden.

Auf Grundlage der vorliegenden Erfindung lassen sich auch spezielle heterogene Bodenbelagsaufbauten bereitstellen. Durch einen entsprechend abgestimmten Vernetzungsgrad der einzelnen Schichten kann dabei das Liegeverhalten günstig beeinflußt werden. Zur Absicherung dieser Wirkung wurde im Rahmen der vorliegenden Erfindung ein geeignetes Meßverfahren entwickelt. Dabei werden Proben des entsprechenden Aufbaus in den Abmessungen 250×250 mm und der entsprechenden Dicke hergestellt. Parallel zu den Probenkanten werden im Winkel von 90° auf die Oberfläche Aufnehmer für ein inkrementales Längenmeßsystem aufgeklebt. Die Probe wird auf einer talkumierten Glasplatte im Normklima 23/50 konditioniert. Anschließend wird die Probe in einem Klimaschrank wechselnden Temperaturen (10 bis 60°C) und Feuchtebedingungen (35 bis 90% rel.F.) ausgesetzt, wobei das Ausdehnungsverhalten aufgezeichnet wird. Mit dieser Meßmethode kann schon im Entwicklungsstadium eine Aussage über das Liegeverhalten eines so hergestellten Bodenbelages gemacht werden. Dadurch wird eine Optimierung der Belagsrezeptur und des darauf abgestimmten Verfahrens erzielt.

Folgende mehrschichtige Aufbauten wurden entwickelt und mit dem oben beschriebenen Meßverfahren getestet: Auf eine homogene, kalandrierte Unterschicht wurde eine Mischung aus mehrfarbigen Partikeln zum Teil unterschiedlicher Größe aufgestreut und verdichtet. Gegebenenfalls kann darüber auch noch eine transparente Schicht als Pulverstreuung oder durch Folienkaschierung aufgebracht werden. Alternativ kann auch ein im Stand der Technik herkömmlicher mehrschichtiger Aufbau aus unterschiedlichen Folien, die unter Druck und Wärme zusammengefügt werden, verwendet werden. Durch die mehrschichtigen Aufbauten, deren Vernetzungsgrad durch das beschriebene Meßverfahren optimiert werden kann, ist auch die Herstellung dimensionsstabiler Fliesen auf Basis der zum Aufbau des erfindungsgemäßen Bodenbelags verwendeten Polymere möglich.

Auch bei der Herstellung des erfindungsgemäßen Bodenbelags als Homogenbelags durch Aufstreuen von Granulat oder Mahlgut auf ein Band mit Release-Eigenschaften sind Strukturvarianten möglich, indem die entsprechenden Partikelfraktionen, und zwar zunächst die Grundfarbe(n), und anschließend die farblich abgesetzten Partikel aufgestreut werden. Dies läßt sich zum einen dadurch erreichen, daß die Grundfarbe über ein Streuaggregat mit einer über die Breite gleichmäßig angeordneten Bürstwalze auf einen Träger gestreut wird. Dadurch wird die Grundfarbe in einer über die Warenbahnbreite gleichmäßigen Gewichtsverteilung aufgebracht. Die farblich abweichenden Partikel werden anschließend ebenfalls aufgestreut, wobei der Streuer aber vorzugsweise derart ausgebildet ist, daß über die Warenbahnbreite unterschiedliche Partikelmengen aufgebracht werden. Anschließend wird die Partikelschüttung vorverdichtet und einer beheizten Presse o.ä. zugeführt. Alternativ können die beiden Streuer für die Partikelschüttung derart ausgebildet sein, daß von der Grundfarbe bzw. den Grundfarben in den Bereichen, in welchen farblich abgesetzte Partikel aufgestreut werden, weniger aufgebracht wird. Durch Aufstreuen der farblich abgesetzten Partikel kann dann in der Summe wieder eine gleichmäßige Partikelschüttung über die Breite erzielt werden. Insbesondere mit dieser zweiten Variante kann auch ohne Vorverdichtung eine verzugsfreie Struktur und eine gleichmäßige Dicke über die Warenbahnbreite erzielt werden. Durch Ausstanzen von zwei bzw. vier gleich großen Fliesen über die Warenbahnbreite können beim Verlegen als Bodenbelag zusätzlich interessante Strukturen erreicht werden.

Die vorliegende Erfindung wird durch das nachstehende Beispiel näher erläutert.

### Beispiel

Aus den folgenden Bestandteilen wurde ein homogenes Gemisch hergestellt und granuliert:

| | |
|---|---|
| DOW DSH 1505 | 1875,0 g |
| DOW EG 8200 | 750,0 g |
| DOW XU 60769.07 | 375,0 g |
| Sillitin Z 89 | 1500,0 g |
| Omyacarb 6 BG | 1125,0 g |
| Kronos 2200 | 375,0 g |
| Glycerinmonostearat | 48,0 g |
| Hostastat FA 14, 50% | 12,0 g |
| Wachs OP | 36,0 g |
| Perkadox 14-40 BPD | 10,2 g |

Die vorstehende Rezeptur wurde in einem gleichsinnig drehenden Zweischnekkenextruder vom Typ ZE 40 der Fa. Berstoff bei gleichzeitiger Vorvernetzung durch das zugesetzte Peroxid compoundiert. Die Zylindertemperatur des Extruders betrug an der Einzugszone 145°C sowie bei den Zonen 3-9 195°C. Die Drehzahl betrug 80 U/min.

Das derart erhaltene Granulat wurde nach Trocknung und Vorwärmung auf 50°C mit einer Mischung aus TAIC (Triallyisocyanurat) und TRIM (Trimethylolpropantrimethylacrylat) benetzt und für etwa 20 min. gemischt. Anschließend wurde eine Mischung aus Trigonox 101 und Dealen CP 31 N zugesetzt und für weitere 10 min. gemischt. Die Mengenverhältnisse waren dabei, bezogen auf 500 g Granulat, wie folgt:

| | |
|---|---|
| TAIC | 1,0 g |
| TRIM | 3,0 g |
| Trigonox 101 | 4,0 g |
| Dealen CP 31 N | 1,0 g |

Das benetzte Granulat wurde nach einer Zwischenlagerzeit von 48 h in einer statischen Presse bei 140°C zu einer Platte verpreßt und diese dann ebenfalls in einer Presse bei 185°C über 10 min. vernetzt. Von der 140°C Platte wurde eine Probe am Göttfert "Elastograph Vario" bei 185°C gemessen. Die eingestellte Meßzeit betrug 12 min., der Deformationswinkel betrug 0,4°. Die T90-Zeit für diese Mischung lag bei 2,9 min., Tvₘₐₓ bei 0,7 min.

Am Probenkörper vom Elastographen wurde das Eindruckverhalten nach EN 433 bestimmt. Die Ausgangsdicke betrug 6,35 mm, der Eindruck nach 150 min. 0,27 mm, der Resteindruck nach 150 min. Entlastung 0,01 mm. Daraus ergibt sich ein Index von 4,3 und eine Rückstellung von 95,1 %.

Von der vernetzten Platte wurden S2-Stäbe ausgestanzt. Die Shore-A-Härte betrug 95, die Shore D-Härte 46. Der S2-Stab mit einer Dicke von 2,23 mm zeigte eine Bruchlast von 12,7 N/mm² und eine Dehnung von 430 %.

## Patentansprüche

1. Bodenbelag, umfassend als polymeres Bindemittel mindestens ein Elastomer auf Basis mindestens eines Polyolefins mit einer Dichte < 0,910 g/cm³ und mindestens eines Pfropfcopolymers, wobei das Polyolefin ein Gemisch von mindestens zwei Ethylencopolymerisaten ist, wobei das Ethylencopolymerisatgemisch als Hauptpolymer ein Copolymerisat (a) mit einer Dichte von 0,89 - 0,91 g/cm³ und zur Steuerung der Rheologie und Elastizität ein Copolymerisat (b) mit einer Dichte von 0,86 - 0,88 g/cm³ und einem MFI > 3 umfaßt.

2. Bodenbelag nach Anspruch 1, wobei das Polyolefin eine Dichte von 0,85 - 0,892 g/cm³ aufweist.

3. Bodenbelag nach Anspruch 1 oder 2, wobei das Polyolefin aus der Klasse der PE-VLD-Polymere ausgewählt ist.

4. Bodenbelag nach einem der Ansprüche 1 bis 3, wobei die Copolymerisate (a) und (b) im Gewichtsverhältnis von 4:1 bis 3:2 vorliegen.

5. Bodenbelag nach einem der Ansprüche 1 bis 4, wobei die Copolymerisate (a) und (b) Copolymerisate von Ethylen mit Octen sind.

6. Bodenbelag nach einem der Ansprüche 1 bis 5, wobei das Pfropfcopolymer ein Pfropfcopolymer auf Basis eines HD-Polyethylens ist.

7. Bodenbelag nach Anspruch 6, wobei das Pfropfcopolymer ein Maleinsäureanhydrid-gepfropftes HD-Polyethylen ist.

8. Bodenbelag nach Anspruch 7, wobei der Pfropfgrad 1 bis 5 % beträgt.

9. Bodenbelag nach einem der Ansprüche 1 bis 8, wobei der Anteil des Pfropfcopolymers, bezogen auf das Gesamtgewicht des polymeren Bindemittels, 5 bis 25 Gew.% beträgt.

10. Bodenbelag nach einem der Ansprüche. 1 bis 9, wobei das Elastomer mit mindestens einem Vernetzungsmittel auf Basis von organischen Peroxiden und gegebenfalls einem oder mehreren Co-Vernetzern vernetzt ist.

11. Bodenbelag nach Anspruch 10, wobei als Co-Vernetzer Isocyanursäurederivate und/oder von Polyolen abgeleitete Acrylat- bzw. Methacrylatderivate verwendet werden.

12. Bodenbelag nach einem der Ansprüche 1 bis 11, der weiter Füllstoffe und/oder Pigmente sowie gegebenenfalls Verarbeitungshilfsmittel, Antioxidantien, Antistatika, UV-Stabilisatoren und Gleitmittel enthält.

13. Bodenbelag nach Anspruch 12, wobei als Füllstoff im wesentlichen ein Gemisch plättchenförmiger und kristalliner Mineralverwachsungen verwendet wird.

14. Bodenbelag nach einem der Ansprüche 1 bis 13, der farblich variabel dessiniert ist und eine homogene Ausführung aufweist.

15. Verfahren zur Herstellung eines Bodenbelags nach einem der Ansprüche 1 bis 14, umfassend das Bereitstellen eines Trägers in Bahnenform und das Aufbringen des in den Ansprüchen 1 bis 13 definierten Elastomers auf eine Seite des Trägers.

16. Verfahren zur Herstellung eines Bodenbelags nach einem der Ansprüche 1 bis-14, umfassend die Schritte:
(a) Compoundieren des in den Ansprüchen 1 bis 13 definierten polymeren Materials zur Herstellung eines Mahlguts oder eines Granulats,
(b) Benetzen von Partikeln mit einer Lösung, die mindestens ein aromatenfreies organisches Peroxid und gegebenenfalls ein oder mehrere Co-Vernetzer und gegebenenfalls Prozeßöl enthält, wobei die Partikel die vorstehend definierten Polymere, welche das polymere Bindemittel des Bodenbelags bilden, unvernetzt oder teilvemetzt in Form eines Mahlguts oder Granulats enthalten,
(c) Erwärmen der Partikel auf eine Temperatur, bei welcher das Peroxid eine ausreichend lange Stabilität aufweist, wobei die Partikel anschließend unter Vorverdichten einer Formgebung zu einem flächigen Produkt unterzogen werden, und
(d) Verpressen des so erhaltenen, flächigen Produkts in einer geeigneten Vorrichtung bei einer Temperatur, bei welcher die Halbwertszeit des Peroxids derart verringert ist, daß gleichzeitig eine durch das Peroxid initiierte Vernetzung erfolgt, zum Erhalt eines flächigen Endprodukts.

17. Verfahren nach Anspruch 16, wobei das Benetzen der Partikel derart durch-geführt wird, daß die Partikel in einem ersten Schritt mit einem oder mehreren Co-Vernetzern und ggf. Prozeßöl benetzt und vermischt werden und anschließend in einem zweiten Schritt mit mindestens einem aromatenfreien organischen Peroxid und ggf. Prozeßöl benetzt und vermischt werden.

18. Verfahren nach Anspruch 16 oder 17, wobei die Masse in Schritt (a) zusätzlich mit einem chemischen Treibmittel compoundiert wird.

19. Verfahren nach Anspruch 18, wobei nach der Vernetzung unter Druck in Schritt (d) durch Druckentlastung bei weiter gesteigerter Temperatur ein Aufschäumen des Materials bewirkt wird.

20. Verfahren nach Anspruch 18 oder 19, wobei das chemische Treibmittel ein Sulfohydrazid oder Azodicarbonamid oder eine Kombination davon ist.

21. Verfahren nach einem der Ansprüche 16 bis 20, umfassend die Schritte:
- Compoundieren des in den Ansprüchen 1 bis 13 definierten polymeren Materials mit Additiven, Füllstoffen, Peroxid, Co-Vernetzern und einem chemischen Treibmittel,
- Teilvemetzen und Aufschäumen des Gemisches in einem Extruder,
- Austragen des Schaums durch eine Extruderdüse in ein Wasserbad und Granulieren des derart gebildeten Strangs und
- Nachmahlen und Trocknen des Granulats, welches anschließend mit einem Gemisch aus flüssigem Peroxid, Co-Vernetzern und Mineralöl benetzt wird, wobei das Mahlgut anschließend auf ein Releasepapier gestreut und mit einem Trennpapier abgedeckt wird und einer beheizten Presse zugeführt wird, wobei die Temperatur und der Druck derart eingestellt werden, daß die Partikelschüttung an den Heizflächen plastisch wird und zu einer geschlossenen Fläche verschmilzt und gleichzeitig durch die Temperatur der Zerfall des Peroxids initiiert wird, wodurch die äußeren Schichten gleichzeitig vernetzen, wobei ein Bodenbelag mit Integralstruktur erhalten wird.

22. Verfahren nach einem der Ansprüche 18 bis 21, wobei in einem Nachbehandlungsschritt ein Kalibrierschliff der Betagsrückseite bewirkt wird.

23. Verfahren nach Anspruch 16 oder 17, wobei die Struktur des vernetzten Materials nach Öffnen der Oberfläche durch Schleifen und/oder Spalten freigelegt wird.

## Claims

1. Floor covering, encompassing, as polymeric binder, at least one elastomer based on at least one polyolefin with density < 0.910 g/cm³ and on at least one graft copolymer, where the polyolefin is a mixture of at least two ethylene copolymers, where the ethylene copolymer mixture encompasses, as main polymer, a copolymer (a) with density of from 0.89 to 0.91 g/cm³ and, for control of rheology and elasticity, a copolymer (b) with density of 0.86 to 0.88 g/cm³ and with MFI > 3.

2. Floor covering according to Claim 1, where the density of the polyolefin is from 0.85 to 0.892 g/cm³.

3. Floor covering according to Claim 1 or 2, where the polyolefin has been selected from the class of the VLDPE polymers.

4. Floor covering according to any of Claims 1 to 3, wherein the copolymers (a) and (b) are present in a ratio by weight of from 4:1 to 3:2.

5. Floor covering according to any of Claims 1 to 4, where the copolymers (a) and (b) are copolymers of ethylene with octane.

6. Floor covering according to any of Claims 1 to 5, where the graft copolymer is a graft copolymer based on an HD polyethylene.

7. Floor covering according to Claim 6, where the graft copolymer is a maleic-anhydride-grafted HD polyethylene.

8. Floor covering according to Claim 7, where the degree of grafting is from 1 to 5%.

9. Floor covering according to any of Claims 1 to 8, where the proportion of the graft copolymer, based on the total weight of the polymeric binder, is from 5 to 25% by weight.

10. Floor covering according to any of Claims 1 to 9, where the elastomer has been crosslinked with at least one crosslinking agent based on organic peroxides and, if appropriate, one or more auxiliary crosslinking agents.

11. Floor covering according to Claim 10, where the auxiliary crosslinking agents used comprise isocyanuric acid derivatives and/or polyol-derived acrylate derivatives or polyol-derived methacrylate derivatives.

12. Floor covering according to any of Claims 1 to 11, which also comprises fillers and/or pigments and also, if appropriate, processing aids, antioxidants, antistatic agents, UV stabilizers and lubricants.

13. Floor covering according to Claim 12, where the filler used in essence comprises a mixture of lamellar and crystalline mineral intergrowths.

14. Floor covering according to any of Claims 1 to 13, which is of variable-colour design and which is homogeneous.

15. Process for production of a floor covering according to any of Claims 1 to 14, encompassing the provision of a backing in web form and the application of the elastomer defined in Claims 1 to 13 to one side of the backing.

16. Process for production of a floor covering according to any of Claims 1 to 14, encompassing the steps of:
(a) compounding of the polymeric material defined in Claims 1 to 13 to produce a ground product or pellets,
(b) wetting of particles with a solution which comprises at least one aromatic-free organic peroxide and which comprises, if appropriate, one or more auxiliary crosslinking agents and which comprises, if appropriate, process oil, where the particles comprise, uncrosslinked or partially crosslinked in the form of ground product or of pellets, the polymers defined above, which form the polymeric binder of the floor covering,
(c) heating of the particles to a temperature at which the peroxide has a sufficient period of stability, the particles then being subjected, with precompaction, to shaping to give a sheet-like product, and
(d) pressing of the resultant, sheet-like product in a suitable apparatus at a temperature at which the half-life time of the peroxide has been reduced to the extent that simultaneous crosslinking initiated by the peroxide takes place, to give a sheet-like final product.

17. Process according to Claim 16, where the wetting of the particles is carried out in such a way that the particles are wetted in a first step with one or more auxiliary crosslinking agents and, if appropriate, with process oil and mixed and then, in a second step, are wetted with at least one aromatic-free organic peroxide and, if appropriate, with process oil, and mixed.

18. Process according to Claim 16 or 17, where the composition in step (a) is also compounded with a chemical blowing agent.

19. Process according to Claim 18, where, after the crosslinking under pressure in step (d), foaming of the material is brought about via depressurization with a further rise in temperature.

20. Process according to Claim 18 or 19, wherein the chemical blowing agent is a sulphohydrazide or azodicarbonamide or a combination thereof.

21. Process according to any of Claims 16 to 20, encompassing the steps of:
- compounding of the polymeric material defined in Claims 1 to 13 with additives, fillers, peroxide, auxiliary crosslinking agents and a chemical blowing agent,
- partial crosslinking and foaming of the mixture in an extruder,
- discharge of the foam through an extruder die into a water bath and pelletizing of the strand thus formed and
- subsequent grinding and drying of the pellets, which are then wetted with a mixture composed of liquid peroxide, auxiliary crosslinking agents and mineral oil, the ground product then being scattered onto a release paper and covered with an antiadhesive paper and introduced into a heated press, the temperature and pressure being adjusted in such a way that the scattered particles become plastic at the heated areas and fused to give a coherent sheet and the temperature simultaneously initiates the decomposition of the peroxide, the result being that the exterior layers simultaneously crosslink, giving a floor covering with integral structure.

22. Process according to any of Claims 18 to 21, where a post-treatment step brings about grinding of the reverse side of the covering for calibration purposes.

23. Process according to Claim 16 or 17, where the structure of the crosslinked material is uncovered after opening of the surface by grinding and/or splitting.

## Revendications

1. Revêtement de sol, comportant en tant que liant polymère au moins un élastomère à base d'au moins une polyoléfine de poids spécifique < 0,910 g/cm³, et d'au moins un copolymère greffé, dans lequel la polyoléfine est un mélange d'au moins deux copolymérisats d'éthylène, le mélange de copolymérisats d'éthylène contenant en tant que polymère principal un copolymérisat (a) d'un poids spécifique de 0,89 à 0,91 g/cm³ et, pour la commande de la rhéologie et de l'élasticité, un copolymérisat (b) d'un poids spécifique de 0,86 à 0,88 g/cm³ et d'un MFI > 3.

2. Revêtement de sol selon la revendication 1, dans lequel le poids spécifique de la polyoléfine est de 0,85 à 0,892 g/cm³.

3. Revêtement de sol selon la revendication 1 ou 2, dans lequel la polyoléfine est choisie dans la classe des polymères PE-VLD.

4. Revêtement de sol selon l'une quelconque des revendications 1 à 3, dans lequel les copolymérisats (a) et (b) sont présents dans un rapport en poids de 4:1 à 3:2.

5. Revêtement de sol selon l'une quelconque des revendications 1 à 4, dans lequel les copolymérisats (a) et (b) sont des copolymérisats d'éthylène avec de l'octène.

6. Revêtement de sol selon l'une quelconque des revendications 1 à 5, dans lequel le copolymère greffé est un copolymère greffé à base d'un polyéthylène HD.

7. Revêtement de sol selon la revendication 6, dans lequel le copolymère greffé est un polyéthylène HD greffé avec de l'anhydride d'acide maléique.

8. Revêtement de sol selon la revendication 7, dans lequel le degré de greffage est de 1 à 5 %.

9. Revêtement de sol selon l'une quelconque des revendications 1 à 8, dans lequel la proportion du copolymère greffé rapportée au poids total du liant polymère est de 5 à 25 % en poids.

10. Revêtement de sol selon l'une quelconque des revendications 1 à 9, dans lequel l'élastomère est réticulé avec au moins un agent de réticulation à base de peroxydes organiques et, le cas échéant, avec un ou plusieurs coréticulants.

11. Revêtement de sol selon la revendication 10, dans lequel des dérivés d'acide isocyanurique et/ou des dérivés d'acrylate ou de méthacrylate dérivés de polyols sont utilisés en tant que coréticulants.

12. Revêtement de sol selon l'une quelconque des revendications 1 à 11, qui contient en outre des matières de charge et/ou des pigments ainsi que, le cas échéant, des agents auxiliaires de traitement, des anti-oxydants, des antistatiques, des stabilisateurs d'UV et des lubrifiants.

13. Revêtement de sol selon la revendication 12, dans lequel un mélange d'adhésions minérales en forme de pastilles et cristallines est pour l'essentiel utilisé en tant que matière de charge.

14. Revêtement de sol selon l'une quelconque des revendications 1 à 13, qui présente des motifs de différentes couleurs et une réalisation homogène.

15. Procédé destiné à la fabrication d'un revêtement de sol selon l'une quelconque des revendications 1 à 14, comportant la mise à disposition d'un support en forme de bande, et l'application sur une face du support de l'élastomère défini dans les revendications 1 à 13.

16. Procédé destiné à la fabrication d'un revêtement de sol selon l'une quelconque des revendications 1 à 14, comportant les phases de :
(a) compoundage de la matière polymère définie dans les revendications 1 à 13 pour la réalisation d'un produit moulu ou d'un granulat,
(b) mouillage de particules avec une solution contenant au moins un peroxyde organique non aromatique, le cas échéant un ou plusieurs coréticulants et, le cas échéant, de l'huile de procédé, les particules contenant les polymères définis ci-dessus, qui constituent le liant polymère du revêtement de sol, à l'état non réticulé ou partiellement réticulé sous la forme d'un produit moulu ou d'un granulat,
(c) chauffage des particules à une température à laquelle le peroxyde présente une stabilité suffisamment longue, les particules étant ensuite soumises par compression préalable à une conformation en un produit plat, et
(d) compactage du produit plat ainsi obtenu dans un dispositif approprié, à une température à laquelle la demi-vie du peroxyde est réduite à un point tel qu'une réticulation initiée par le peroxyde ait simultanément lieu pour l'obtention d'un produit fini plat.

17. Procédé selon la revendication 16, dans lequel le mouillage des particules est effectué de telle sorte que, dans une première phase, les particules soient mouillées et mélangées avec un ou plusieurs coréticulants et, le cas échéant, de l'huile de procédé et que, dans une deuxième phase, elles soient ensuite mouillées et mélangées avec au moins un peroxyde organique non aromatique et, le cas échéant, de l'huile de procédé.

18. Procédé selon la revendication 16 ou 17, dans lequel la masse est en outre compoundée dans la phase (a) avec un agent d'expansion chimique.

19. Procédé selon la revendication 18, dans lequel, après la réticulation sous pression, une expansion du matériau est effectuée dans la phase (d) par décharge de pression à température plus élevée.

20. Procédé selon la revendication 18 ou 19, dans lequel l'agent d'expansion chimique est un sulfohydrazide ou un azodicarbonamide ou une combinaison de ceux-ci.

21. Procédé selon l'une quelconque des revendications 16 à 20, comportant les phases de:
- compoundage de la matière polymère définie dans les revendications 1 à 13 avec des additifs, des matières de charge, du peroxyde, des coréticulants et un agent d'expansion chimique,
- réticulation partielle et expansion du mélange dans une extrudeuse,
- évacuation de la mousse par une filière d'extrudeuse dans un bain d'eau, et granulation du boudin ainsi obtenu, et
- mouture postérieure et séchage du granulat, qui est ensuite mouillé avec un mélange constitué de peroxyde liquide, de coréticulants et d'huile minérale, le produit moulu étant ensuite dispersé sur un papier anti-adhésif et recouvert d'un papier de séparation, et étant amené à une presse chauffée, la température et la pression étant réglées de telle sorte que le déversement des particules devienne plastique au niveau des surfaces chauffantes et fonde en une surface fermée, et que la décomposition du peroxyde soit simultanément initiée par la température, moyen par lequel les couches extérieures sont simultanément réticulées, ce qui conduit à l'obtention d'un revêtement de sol à structure intégrale.

22. Procédé selon l'une quelconque des revendications 18 à 21, dans lequel un polissage de calibrage de la face arrière du revêtement est effectué au cours d'une phase de post-traitement.

23. Procédé selon la revendication 16 ou 17, dans lequel la structure du matériau réticulé est dégagée par meulage et/ou fendage après l'ouverture de la surface.
